# EUROPEAN PATENT APPLICATION

(11) **EP 1 980 590 A1**
(43) Date of publication of application: **15.10.2008**
(21) Application number: 08251385.4
(22) Date of filing: 09.04.2008
(51) Int. Cl.: C08L 67/02, C08K 3/34, C08J 5/00, B65D 1/02

(54) **A polyester gas barrier resin and a process therefor**

(30) Priority: 09.04.2007 IN MU07052007
(71) Applicant: Futura Polyesters Limited, Mumbai 400 013 (IN)
(72) Inventor: Tammaji, Kulkarni Sanjay, 600 068 Tamil Nadu (IN); Palaniandavar, Santhana Gopala Krishnan, 600 068 Tamil Nadu (IN); Mohan, Turup Pandurangan, 600 068 Tamil Nadu (IN); Ramamoorthy, Madanagopal, 600 068 Tamil Nadu (IN); Dillyraj, Balasundaram, 600 068 Tamil Nadu (IN); Raja, Mohankumar Sundarammal, 600 068 Tamil Nadu (IN)
(74) Representative: Peebles, Katrina

(57) **Abstract**

A preform resin composition is disclosed, comprising PET resin and a suspension of nano clay particles in an amount of 50 to 5000 ppm with respect to the resin, wherein the nano clay particles have a particle size ranging between 20 and 100 nm and are ultrasonically dispersed in a suspension medium, such as DMF. A method of making the perform resin is also disclosed

## Description

The present invention is in the field of polymer-based gas barrier resins.

Particularly, the present invention relates to a process for the preparation of said resin composition.

### Background of the invention

Barrier properties of a polymer container involve the ability of the polymer to slow down or stop the passage of a gas through its wall thickness. A barrier property is most commonly quantified by measuring the polymer's permeability, the rate at which a given gas will pass through the polymer under a given set of conditions. Permeability is quantified by a material property called the diffusion coefficient or diffusivity constant, D. This constant is a measure of how easily a gas passes through a material. Low permeability means that the gas has difficulty to pass through a substance, typically over an extended period of time, and sometimes under elevated pressures and/or temperature. Polymers with low permeability are referred to as barrier materials in the packaging industry. They are responsible in helping to prevent CO₂ and N₂ escaping from the polymer container as well as retaining flavor and minimizing O₂ ingress.

Carbonated Soft Drinks (CSD), particularly small volumes i.e < 500 ml, are normally packed in Glass bottles or Aluminium Cans.
If PET bottles are used for storing CSD in small sizes, their high surface area relative to volume calls for a relatively high CO₂ barrier improvement. This is primarily due to the fact that small containers have more surface area for a given volume of product than larger containers and they lose CO₂ easily in hot climatic conditions than large containers. Enhancing the wall thickness as a barrier enhancement is not considered as economically feasible. As a result, there is a necessity to enhance the barrier property for a monolayer smaller volume container to offset the loss due to the large surface area volume ratio.

In large volume containers the enhanced barrier property gives an opportunity to reduce the wall thickness or weight without compromising the shelf life of the product.

One of the three fundamental ways to build CO₂ barrier into PET bottles is to design a multi-layer structure sandwiching PET structural layers around a core layer or layers containing barrier enhancement materials. However, multilayer extrusion technology is more complex compared to the monolayer extrusion to bottles and also it leads to recyclability problem due to the use of non polyester material as barrier middle layer.

US patent application 2006286349 discloses a multilayer film having high oxygen barrier. The multilayer film has an inner layer of PET an outer layer of CoPET and a middle layer of Poly(m-xylene-adipamide).

Similarly, JP 200296593 also describes about a polyester multilayer sheet with upgraded gas barrier properties. The multilayer is formed by one or more layers of polyethylene terephthalate and polytrimethylene naphthalate.

Surface-coating technologies apply a super-thin barrier to outer surface of a monolayer PET bottle. This again involves additional coating machinery. KR patent application 20010062265 describes a film with gas barrier coating composition on a polyester substrate. The coating composition comprises of polyvinyl alcohol, an amino group, glycidyl ether and fiber. This type of barrier coating may get damaged during transit and will lead to inconsistent performance.

An example which combines both the above said technology is reported in KR patent application 20040067972 for a gas barrier film. The inner layer is made of polyester and poly(m-xyleneadipamide) with a barrier coating and barrier layer is made of copolymer blend of maleic acid and acrylic acid.

The "ideal" route to a barrier PET bottle is a monolayer polyester structure either with a barrier improved homopolyester or copolyester or with the alloys / blends of suitable polyesters. Also coating equipment would not be needed, and bottle design freedom would remain unfettered.

CN 1786043 describes the preparation of PET composite material by compounding PET and nano oxides to increase the barrier property in monolayer structures. Similarly, KR patent application 20020078719 deals with a method of producing a film with excellent gas-screening property and transparency. The film is produced by forming a gas-screening layer which is obtained by mixing and dispersing clay in a dispersing medium, on the surface of a polymer film like PET, Nylon . US 5972448 disclose a resin composition which includes inter alia PET in which nano clay, preferably montmorillonite is added at the time of *insitu* polymerization. Containers formed from this nanocomposite polymer resin show decrease in the permeability of various gases.

The clay -based nanocomposites act as "passive-active" barrier systems . These nano additives are used to enhance properties of polymers such as mechanical properties, flavor retention, gas barrier and thermal stability. Since the size of particle is of nanometer scale, the clarity of the blown containers made from the nanocomposite resin is as good as pristine polyester resin. The nano additives in the known art are incorporated into polyester resin by *insitu* polymerization. The nano particles in the composition undergo thermal shock at three stages until the final formation of the container, first during the in situ polymerization, secondly when converting the resin into a preform for the container and finally at the bottle making stage at the time of stretch blow moulding for converting into the container. This reduces the effectiveness of the nano particles to provide the gas barrier properties and also affects the transparency of the final container. It is also suggested that during the preform formation stage the nano composites may also agglomerate.

### Objects of the present invention

The primary object of the present invention is to provide a gas barrier polyester resin based preform composition with enhanced barrier properties.

Another object of the present invention is to provide a process for the preparation of polyester gas barrier resin preform composition.

Another object of the present invention is to provide a polyester gas barrier resin composition suitable for carbonated soft drink (CSD) containers even in smaller volumes (200-330 mL) in normal injection stretch blow molding (ISBM) machine by heat set or cold set blowing condition.

It is also an object of the present invention to provide a polyester gas barrier resin composition to enhance the barrier property of a polyester resin for gases such as carbon dioxide, oxygen, nitrogen and water vapor as well as retention of flavor.

Another object of the present invention is to induct additives which improve barrier properties at an advantageous stage of converting the polymer to a preform or container.

Another object of the present invention is to form improved preforms which impart gas barrier properties to the containers made therefrom.

### Summary of the invention

This invention discloses the surprising effect that dispersing nano clay additives in the resin composition at the time of making a preform for a container by introducing a suspension of the additive ultrasonically dispersed in a suspension agent such as DMF through a dosing equipment and blending the suspension in the resin matrix significantly improves the gas barrier properties of the container ultimately formed from the preform. The advantages of this approach are that the nano additives are subjected to high temperature for a short duration of time only, precise control of the amount of nano additive is achieved and there is a better dispersion.

The present invention provides a polyester gas barrier resin composition comprising Polyethylene terephthalate (PET), along with a suspension containing nano additives.

The present invention also provides a process which includes the induction of nano additives into the resin during preform making by injection molding. The PET is alloyed or dry blended with nano additives such as nano particles of clay of particle size between 20 and 100 nm and in a ratio of 50 to 5000 ppm with respect to the mass of the resin to obtain preforms. The preforms are further blown into containers having the desirable gas barrier properties.

### Description of the Invention

Accordingly, the present invention provides a polyester gas barrier resin composition of Polyethylene terephthalate (PET), and a suspension containing ultra sonically dispersed nano clay of particle size ranging between 20 and 100 nm as an additive in a ratio of 50 ppm to 5000 ppm of the mass of the resin .

The PET resin may be used alone or together with nucleating agents. The nano additives of the present invention is advantageously added to the polyester at the time of preform formation.

The present invention also provides a process for the preparation of PET resin preforms having PET alloyed resin and a suspension containing thoroughly dispersed nano additives therein which involves ultrasonication of the suspension and adding the suspension while making the preform in an injection molding machine using the dosing system.

The advantage of introducing the nano additives during the preform making rather than adding the same during poymerixzation viz.the *insitu* method, the dispersion of the nano additive in the solvent medium and the dosing procedure of the slurry prior to injection molding of the preform are as follows.

Nanoclay used is an organic derivative of smectite clay. It is white to light cream powder having specific gravity in the range of 1.5 to 1.9. More than 99 % passes through 200 mesh and having a size between 20 nm and 100 nm.

The Nanoclay is dried at 140°C for 2 hrs. Appropriate amount of dried additive is weighed along with N, N- Dimethyl Formamide (DMF) solvent and mixed well in glass bottles (concentration of nano additive is maintained at 1.5%). All the bottles are kept in the ultrasonication bath maintained at - 50 °C for 60 mins.

The stainless steel Ultrasonicator bath of 20" x 12" x 12" dimension works typically at a frequency of 33 KHz and is provided with a heater to heat the bath water to the required temperature and peizo electric ceramic transducers to generate the sonic waves.

The nanosuspension of nano clay is used for preform making.

Polyesters are prepared from dicarboxylic acid and glycol by step-growth polycondensation. These reactions are typically carried out at temperatures as high as 280 or 290 deg C for 120 to 150 min to get amorphous chips. Further, these amorphous chips are precrystallized by subjecting to about 130 deg C for 30 min to prevent sticking together and finally solid state polycondensation (SSP) is carried out in the temperature range of 180 to 240 deg C for 10 hours or more depending on the final intrinsic viscosity (I.V.) requirement. Most of the nanoadditives such as nanoclays are not capable of withstanding such a prolonged high temperature exposure. These nanoclays are reported to have lesser thermal stability and lose about 12 % of its weight at 300 deg C in air (D. M. Delozier, R. A. Orwoll, J. F. Cahoon, n. J. Johnston, j. G. Smith Jr., and J. W. Connell, Polymer, 43, 813 (2002).). This is attributed to the presence of long-chain aliphatic hydrocarbon moiety in nanoclays. Therefore, many of the commercially available nanoclays are not suitable for induction during polymerization of polyesters. To overcome this limitation, it has been reported by Krishnan et al [P. S. G. Krishnan, M. Joshi, P. Bhargava, S. Valiyaveettil and C. He, *J. Nanosci. Nanotech.,* 5, 1148 (2005).] to use heterocyclic based nanoclays in polyimides, where similar high temperature is needed during processing to remove water and N-Methyl Pyrrolidone (NMP) solvent. Alternatively, one can dose these nanoadditives during preform making using a dosing unit. In this approach, these additives are subjected to higher temperature for lesser time. Dosage amount can be varied by varying the applied voltage. The amount of additive dosed is arrived as given below:

| **Dosage calculation:** | |
|---|---|
| Empty container weight | : W₀ gm |
| Empty container + amount of nanoadditive dosed for 10 shots | : W gm |
| Amount of nanoadditive dispensed for 10 shots | : (W - W₀) gm |
| Amount of nanoadditive dispensed for 1 shot | : (W - W₀) / 10 gm |
| Number of cavities in the mold | : N |
| Weight of 1 preform | : Wp gm |
| Total resin consumed in a single shot | : (N x Wp) g |
| Nanoadditive dosed in ppm | : (W - W₀)x10⁶/10(N x Wp) |
| i.e., | : (W - W₀)x10⁵/ (N x Wp) |

Depending on the amount of nanoadditive to be added the appropriate voltage is chosen.

The alloy or blend of PET containing the nano additives of the present invention can be formed into variety of articles including small volume (200-330 mL) CSD bottles in the normal injection stretch blow molding (ISBM) machine by cold set or heat set blowing condition. The improved resin with nano additives in the preform composition of the present invention provides a significantly enhanced improvement of barrier properties for gases especially carbon dioxide, oxygen, nitrogen and water vapor as well as flavor retention.

In accordance with an optional embodiment of the present invention, the PET composition is modified with nucleating agents typically but not limited to sodium acetate, sodium salicylate, sodium sorbitol. Particularly, micronized nucleating agents are selected from the group consisting of sodium benzoate, potassium benzoate and talc.

In the process of the present invention, the selected additives or monomers are added to the paste of pure terephthalic acid (PTA) and mono ethylene glycol (MEG) in the ratio of about 70:30 and the paste is charged into an esterifier. The paste also comprises a polycondensation catalyst, preferably of antimony (Sb), Germanium (Ge), Tin (Sn) and Titanium (Ti) based along with suitable fast reheat (FRH) additives like carbon or clear fast reheat (CFRH) additives (optional as required) like oxides of iron, oxides and carbides of transition metals.

The paste also comprises colorants like cobalt acetate and organic toners like 8,9,10,11-tetrachloro-12H-phthaloperin-12-one (Red Toner) and 1,4-bis(mesitylamino)anthraquinone (Blue Toner). After the esterification process, the product is pre-polymerized in a pre-polymerization reactor and transferred to the polycondensation reactor. Prior to this transfer, heat stabilizers like phosphorous acid or phosphoric acid or triethyl phosphonoacetate are added to the prepolymer melt. After reaching the required intrinsic viscosity (I.V.) the molten polymer is extruded into amorphous PET chips and subjected to solid state polymerization (SSP) to increase the IV. The SSP resin can be used for injection molding of the preforms and are then stretch blow molded with or without heat setting to make CSD bottles. These bottles are then characterized for their clarity, crystallinity, gas barrier properties and the like.

In an embodiment of the present invention, nano additives in the form of nano clay are used up to a maximum of 5000 ppm. The nano additives are induced during preform making as a master batch of nano additive suspension.

In another embodiment of the present invention the PET resin composition having nucleating agents, nano and micronized particles, and colorants are blended.

It is also an embodiment of the present invention, the PET resin wherein the nucleating agents are selected from sodium stearate, sodium benzoate, potassium stearate and benzoate, silica slurry, sorbitol based chemicals and micornized sodium or potassium benzoates and stearates as well as talc.

In yet another embodiment of the present invention, the PET resin includes fast reheat (FRH) additives and clear fast reheat additives (CFRH) are selected from carbon black, oxides of iron, oxides and carbide of transition metals.

In a further embodiment of the present invention, the PET resin has an I.V. is in the range of 0.70 - 0.90 dL/g.

The invention is further explained in the form of following examples. However, these examples should not be considered as limiting the scope of the present invention.

### Example 1

10.38 kg of pure terephthalic acid and 4.46 kg of monoethylene glycol are taken in an esterification vessel, in 1:1.4 molar ratio. To this, nucleating agent, sodium benzoate 50 ppm (0.6 g) is added. Polymerization catalyst antimony trioxide 240 ppm as Sb (3.44 g), colorants cobalt acetate 20 ppm as Co (1.01 g), red toner 1.5 ppm (0.018 g) and blue toner 1.2 ppm (0.014 g) are further added to the above mixture. The esterification reaction is carried out at 240 - 265 °C temperature for 190 minutes. The esterified pre-polymer is transferred to the polycondensation reactor.

Before commencing polymerization, triethyl phosphonoacetate 50 ppm as P (TEPA, 4.34 g) and CFRH additive viz. oxide of transition metal 10 ppm (0.12 g) are added. The polymerization is conducted at a temperature of 265 - 290 °C under 5-15 mbar for 180 minutes. The polymer melt is kept under agitation for a period of 20 minutes before the amorphous alloyed polyester melt is extruded. After the required torque is reached, the molten amorphous polymer is extruded under nitrogen pressure and collected as pellets. The resulting amorphous polymer with I.V. ~ 0.6 dUg is solid state polymerized to I.V. ~ >0.7 dUg, made into a preform by injection molding and analyzed for their characteristics.

### Example 2

In this example the resin composition and process conditions are followed as mentioned in Example 1. Additionally the nano clay, as nano additive, at 50 ppm was incorporated into the resin during preform making in a suspension in DMF. The suspension was prepared by suspending 1.5 g of Nano clay having a particle size between 20 and 100 nm in 100 ml of DMF having a viscosity of 0.92 cP at 20°C. The suspension was ultrasonicated by a ultrasonicator at a frequency of 33 KHz for 60 minutes until the nano clay particles were thoroughly dispersed in the suspension. This suspension was introduced in the dosing unit of an injection moulding machine and the dosing was set such that the ratio of the nano clay to PET resin was 50 ppm.

### Example 3

The resin composition of Example 3 is similar to Example 2 but with an increased quantity of nano additive viz.500 ppm.

### Example 4

The resin composition in this example is similar to Example 3 except that instead of dosing the nano additive while making the preforms it is incorporated in the resin with the other additives i.e by *insitu* polymerization.

### Example 5

The resin composition of Example 5 is similar to Example 2 but with an increased quantity of nano additive viz. 1000 ppm.

### Example 6

The resin composition of Example 6 is similar to Example 2 but with an increased quantity of nano additive viz.3000 ppm.

### Example 7

The resin composition of Example 7 is similar to Example 2 but with an increased quantity of nano additive viz.5000 ppm.

### Example 8

The resin composition in this example is similar to Example 5 except that instead of dosing the nano additive while making the preforms it is incorporated in the resin with the other additives i.e by *insitu* polymerization.

### Example 9

The resin composition in this example is similar to Example 6 except that instead of dosing the nano additive while making the preforms it is incorporated in the resin with the other additives i.e by *insitu* polymerization.

### Example 10

The resin composition in this example is similar to Example 7 except that instead of dosing the nano additive while making the preforms it is incorporated in the resin with the other additives i.e by *insitu* polymerization.

### Example 11

The resin composition in this example is similar to Example 8 except that the nucleating agent is not added

The results of the various trials in Examples 1 to 11 are summarized in Table -1 and 2

**TABLE -1 - PROPERTIES OF RESIN**

| **PARAMETER** | **UNITS** | **EX. 1** | **E.X. 2** | **EX. 3** | **EX. 4** | **EX. 5** | **EX. 6** | **EX. 7** | **EX. 8** | **EX. 9** | **EX. 10** | **EX. 11** |
|---|---|---|---|---|---|---|---|---|---|---|---|---|
| **Quantity Amorphous Resin** | kg | 12.5 | 12.5 | 12.5 | 12.5 | 12.5 | 12.5 | 12.5 | 12.5 | 12.5 | 12.5 | 12.5 |
| **Sodium benzoate** | ppm | 50 | so | 50 | 50 | 50 | 50 | 50 | 50 | 50 | 50 | 0 |
| **Nano Additive** | ppm | 0 | 50@ | 500@ | 500$ | 1000@ | 3000@ | 5000@ | 1000$ | 3000$ | 5000$ | 1000$ |
| **Sb₂O₃, as Sb** | ppm | 240 | 240 | 240 | 240 | 240 | 240 | 240 | 240 | 240 | 240 | 240 |
| **CFRH additive** | ppm | 10 | 10 | 10 | 10 | 10 | 10 | 10 | 10 | 10 | 10 | 10 |
| **Cobalt acetate, as Co** | ppm | 20 | 20 | 20 | 20 | 20 | 20 | 20 | 20 | 20 | 20 | 20 |
| **RT / BT** | ppm | 1.5/1.2 | 1.5/1.2 | 1.5/1.2 | 1.5/1.2 | 1.5/1.2 | 1.5/1.2 | 1.5/1.2 | 1.5/1.2 | 1.5/1.2 | 1.5/1.2 | 1.5/1.2 |
| **TEPA, as Phosphorous** | ppm | 50 | 50 | 50 | 50 | 50 | 50 | 50 | 50 | 50 | 50 | 50 |
| **IV (SSP Resin)** | dL/g | 0.825 | 0.827 | 0.828 | 0.826 | 0.829 | 0.823 | 0.825 | 0.824 | 0.827 | 0.826 | 0.823 |
| **L*** | CIELab | 78.8 | 79.7 | 80.5 | 77.6 | 79.9 | 78.4 | 79.5 | 76.7 | 75.8 | 74.3 | 76.4 |
| **a*** | CIELab | -1.3 | -1.2 | -1.4 | -1.6 | -1.4 | -1.5 | -1.3 | -1.8 | -2.0 | -2.2 | -1.7 |
| **b*** | CIELab | -2 | -1.1 | -1.4 | -0.4 | -1.6 | -1.3 | -1.1 | -0.1 | 0..2 | 0..9 | 0.1 |
| **DEG** | wt.% | 1.35 | 1.19 | 1.23 | 1.31 | 1.38 | 1.35 | 1.29 | 1.21 | 1.18 | 1.23 | 1.22 |
| **COOH No. (for amorphous resin)** | meq/kg | 18 | 14 | 14 | 15 | 16 | 16 | 14 | 13 | 17 | 14 | 15 |
| **Glass Transition Temperature, T_{g}*** | °C | 80 | 83 | 84 | 82 | 82 | 80 | 83 | 84 | 82 | 83 | 83 |
| **Peak Crystallization Temperature, T_{ch}*** | °C | 147 | 143 | 142 | 144 | 147 | 143 | 142 | 144 | 143 | 142 | 148 |
| **Melting Point, Tₘ*** | °C | 254 | 264 | 264 | 261 | 259 | 254 | 264 | 264 | 261 | 260 | 261 |
| **Haze(Optical)** | CIE Lab | - | - | - | 9.9 | 12.1 | 12.6 | 58.9 | 15.1 | 16.8 | 65.8 | 11.9 |

**TABLE - 2 - PROPERTIES OF PREFORM**

| **PARAMETER** | **UNITS** | **EX. 1** | **E.X. 2** | **EX. 3** | **EX. 4** | **EX. 5** | **EX. 6** | **EX. 7** | **EX. 8** | **EX. 9** | **EX. 10** | **EX. 11** |
|---|---|---|---|---|---|---|---|---|---|---|---|---|
| **Quantity Amorphous Resin** | kg | 12.5 | 12.5 | 12.5 | 12.5 | 12.5 | 12.5 | 12.5 | 12.5 | 12.5 | 12.5 | 12.5 |
| **Sodium** benzoate | ppm | 50 | 50 | 50 | 50 | 50 | 50 | 50 | 50 | 50 | 50 | 0 |
| **Nano Additive** | ppm | 0 | 50@ | 500@ | 500$ | 1000@ | 3000@ | 5000@ | 1000$ | 3000$ | 5000$ | 1000$ |
| **Sb₂O₃, as Sb** | ppm | 240 | 240 | 240 | 240 | 240 | 240 | 240 | 240 | 240 | 240 | 240 |
| **CFRH additive** | ppm | 10 | 10 | 10 | 10 | 10 | 10 | 10 | 10 | 10 | 10 | 10 |
| **Cobalt acetate, as Co** | ppm | 20 | 20 | 20 | 20 | 20 | 20 | 20 | 20 | 20 | 20 | 20 |
| **RT/BT** | ppm | 1.5/1.2 | 1.5/1.2 | 1.5/1.2 | 1.5/1.2 | 1.5/1.2 | 1.5/1.2 | 1.5/1.2 | 1.5/1.2 | 1.5/1.2 | 1.5/1.2 | 1.5/1.2 |
| **TEPA, as Phosphorous** | ppm | 50 | 50 | 50 | 50 | 50 | 50 | 50 | 50 | 50 | 50 | 50 |
| **IV of Preform** | dUg | 0.822 | 0.814 | 0.818 | 0.820 | 0.814 | 0.819 | 0.820 | 0.811 | 0.813 | 0.816 | 0.817 |
| **L*** | CIELab | 67.3 | 66.3 | 68.3 | 65.2 | 67.5 | 66.8 | 67.1 | 65.1 | 64.4 | 63.1 | 65.1 |
| **a*.** | CIELab | 0.30 | 0.28 | 0.51 | 0.42 | 0.53 | 0.33 | 0.62 | 0.52 | 0.75 | 0.94 | 0.46 |
| **b*** | CIELab | 4.00 | 4.82 | 5.07 | 5.91 | 4.74 | 5.11 | 5.43 | 6.18 | 7.51 | 9.65 | 5.9 |
| **Haze(Optica**l) | CIE Lab | - | - | - | 9.9 | 12.1 | 12.6 | 58.9 | 15.1 | 16.8 | 65.8 | 11.2 |
| **Crystallinity by Density Gradient for the Blown Bottle** | % | 25.9 | 28.4 | 28.6 | 26.7 | 25.2 | 25.9 | 28.4 | 28.6 | 26.7 | 26.6 | 20.0 |

| | | | | | | | | | | | | |
|---|---|---|---|---|---|---|---|---|---|---|---|---|
| Values are from DSC measurements and measured during second heating cycle. Ex 1, Ex 2 etc are pertaining to Resin from Example I, Example 2 etc @-Nano additives are added while making the preforms $- Nano additives are incorporated *in situ* during polymerization | | | | | | | | | | | | |

The values obtained for the various parameters in the Examples 1 to 11 lead to the following inferences.
1. The CIE color values viz. L* and b* of the base PET resin are good and gets affected by change in the concentration of nano additives if they are added *insitu* as seen in Examples 4 and 8 to 11.
2. The addition of the nano particles during the preform making does not significantly affect the color except for the decreased L* and increased b* due to the thickness of the preforms.
3. This is also reflected in the low haze values of the preforms indicating that the clarity is good.
4. The resin and preform properties and the blown bottle crystallinity are equal or better when the nano additives are incorporated while making the preforms.
5. When the dosage level is below 5000 ppm, the optical haze is in the range of 9.9 to 12.6. Upon blowing, these performs produced clear bottle. When the dosage level is above 5000 ppm, the preforms produced turned opaque. When these preforms were blown, the bottles are found to have pearlescence, making them unsuitable for packaging application.

Based on the above observation the nano additive is kept in the preferred range of 500 to 2500 ppm and the barrier properties of the blown bottles are tested.

The preforms are further blown into 250mL CSD bottles. To assess the barrier resistance to carbon dioxide of these bottles the gas volume (GV) measurement is made. These bottles were filled with 250 mL of water (brimful volume is 280 mL) and required amount of citric acid and sodium bicarbonate were dissolved and closed with 28 mm PCO caps (plastic closures). CO₂ was generated in-situ in the container. Gas-volume was measured for the headspace by puncturing the PCO cap using Zahm New Style Air Tester, series 7000 supplied by Zahm and Nagel, NewYork, USA. This was taken as the initial value. These bottles were stored at 23°C, 50% RH. Six bottles were tested for GV every week and the average of these six values are given in Table - 3.

**TABLE - 3: CO₂ Retention of 250 mL bottles with Nano Additives Introduced at the Preform Injection Molding Stage or in the Polymerization Stage**

| | **GAS VOLUME** | | | | | | | |
|---|---|---|---|---|---|---|---|---|
| **STORAGE TIME** | **COLD SET BLOWN** | | | | **HEAT SET BLOWN** | | | |
| ↓ | **Example-1** | **Example-2** | **Example-3** | **Example-4** | **Example-1** | **Example-2** | **Example-3** | **Example-4** |
| **Zero^{th} Day** | **4** | **4** | **4** | **4** | **4** | **4** | **4** | **4** |
| **1^{st} Week** | 3.50 (12.5) | 3.75 (6) | 4 (0) | 3.85(4) | 3.65 (9) | 3.95(1) | 4(0) | 3.97 (0.75) |
| **2^{nd} Week** | 3.40 (15) | 3.65 (9) | 3.95 (1) | 3.84 (4) | 3.60 (10) | 3.95 (1) | 3.95 (1) | 3.93 (1.75) |
| **3^{rd} Week** | 3.30 (17) | 3.60 (10) | 3.93 (1.75) | 3.77 (5.75) | 3.60 (10) | 3.90 (2) | 3.95 (1.25) | 3.75 (6.25) |
| **4^{th} Week** | 3.1 (22.5) | 3.56 (11.0) | 3.80 (5.0) | 3.65 (8.75) | 3.55 (11.25) | 3.58 (10.5) | 3.82 (4.5) | 3.66 (8.50) |
| **6^{th} Week** | 3.0 (25.0) | 3.50 (12.5) | 3.60 (10.0) | 3.52 (12.0) | 3.35 (16.25) | 3.50 (11.0) | 3.63 (9.25) | 3.54 (15.00) |
| **8^{th} Week** | 2.98 (25.5) | 3.4 (14.0) | 3.50 (12.5) | 3.41 (14.75) | 3.1 (22.5) | 3.48 (13.0) | 3.54 (11.50) | 3.43 (14.25) |
| **10^{th} Week** | 2.9 (27.5) | 3.3 (17.5) | 3.42 (14.5) | 3.32 (17.0) | 3.0 (25.0) | 3.33 (16.75) | 3.44 (14.0) | 3.33 (16.75) |
| **12^{th} Week** | 2.88 (28.0) | 3.23 (19.25) | 3.32 (17.0) | 3.29 (17.75) | 2.89 (27.75) | 3.25 (18.75) | 3.35 (16.25) | 3.29 (17.75) |
| **14^{th} Week** | - | - | 3.27 (18.25) | 3.19 (20.25) | - | - | 3.30 (17.5) | 3.25 (18.75) |

| | | | | | | | | |
|---|---|---|---|---|---|---|---|---|
| Note: Figures in paranthesis indicate the % CO₂ Loss | | | | | | | | |

For carbonated soft drinks (CSD) in PET bottles the shelf life is determined by the % loss in CO₂ during storage and the number of weeks, wherein the % loss of CO₂ < 17 is accepted as good and this is generally about 6 weeks for 500mL capacity. But in the case of smaller size bottles like 250 to 330 mL containing no passive barrier resin and nano additive the 17 % loss in CO₂ occurs in about a few weeks time thereby affecting the shelf life.

Table -3 clearly indicates that the resin without the nano additive (Example 1) fails to retain CO₂ and looses > 17% within three weeks particularly in cold set bottles. In heat set bottles of Example 1 their performance is better than Example 1 of cold set bottles though not as good as Examples 2, 3 & 4 of cold set bottles. Cold set bottles made from resins of Examples 2, 3 & 4 containing nano additives show a very favorable trend of minimum loss of CO₂ in the first few weeks storage and more so with higher quantity of nano additive as seen in Example 3 and 4. As expected the heat set bottles from resins of Examples 2, 3 and 4 show an improved barrier effect when compared to the cold set bottles. When Examples 2, 3 and 4 are compared the barrier results of Example 3 are better than Example 4, both containing the same amount of nano additives, but in Example 3 the nano additives are dosed while preform making.

The bottles made from the resin containing nano additives perform better than the one prepared from resin without nano additives. Similarly, bottles made by heat set blow molding perform better than cold set bottles. At a nano additive level of about 500 ppm (Example-3 and 4) the cold set and heat set 250 mL bottles show a retention of CO₂, within 17 % loss, upto about 10 to 14 weeks.

The Barrier PET polyester with either in built nano additive or dosed while preform making, were converted to a cast film by compression molding. These film samples were then evaluated for their CO₂ and O₂ permeability. CO₂ permeability were tested using Gas Permeability Tester Lab BTY-B1 Model. Both standard PET (without nano particles) and the Barrier PET films were tested at 28°C and 75% RH by ISO 2556 method using the Proportion mode. Gas Transmission Rate (GTR) and Gas Permeability Coefficient (GPC) values are determined as given in Table - 4.

**TABLE - 4: CO₂ Permeability Data**

| **SAMPLE** | **GTR (cc.cm/cm².s.Pa)** | **GPC (cc/m².d.Pa)** | **BIF** |
|---|---|---|---|
| **Standard PET** | 2.119x10⁻¹⁴ | 9.157 x 10⁻⁴ | 1.00 |
| **Example-1** | 1.295x10⁻¹⁴ | 5.597x10⁻⁴ | 1.60 |
| **Example -2** | 8.475x10⁻¹⁵ | 3.663x10⁻⁴ | 2.50 |
| **Example-3** | 5.233x10⁻¹⁵ | 2.093x10⁻⁴ | 4.38 |
| **Example - 4** | 6.98x10⁻¹⁵ | 1.508x10⁻⁴ | 3.04 |

Here again the barrier improvement factor (BIF) is better in Example 3 where the nano additives are dosed while making the preform.

The film samples were also tested for their O₂ transmission rates (OTR) as per ASTM D 1434-98 and the results are given in Table - 5 and shows the same trend that dosing of nano additives while making the preform is better than *insitu* addition.

**TABLE - 5: O₂ Permeability Data**

| **SAMPLE** | **OTR (ml/m²/day at 23 ± 1°C (Max)** | **BIF** |
|---|---|---|
| **Standard PET** | 64.28 | 1.0 |
| **Example - 1** | 59.63 | 1.08 |
| **Example - 2** | 50.30 | 1.28 |
| **Example - 3** | 26.02 | 2.47 |
| **Example - 4** | 35.45 | 1.80 |

The Barrier PET resins from Example 1-4 are converted to bottles by Injection Molding to Preforms followed by Stretch Blow Molding to 250 ml bottles. The CO₂ loss and O₂ ingress with time for these bottles are determined using GMS Applied Films equipment maintaining an initial pressure inside the bottle at 4 or 5 bar and maintaining 28°C or 38°C and 50% RH. The results are given in Table - 6. The oxygen ingress in these bottles measured as dissolved oxygen are given in Table - 7.

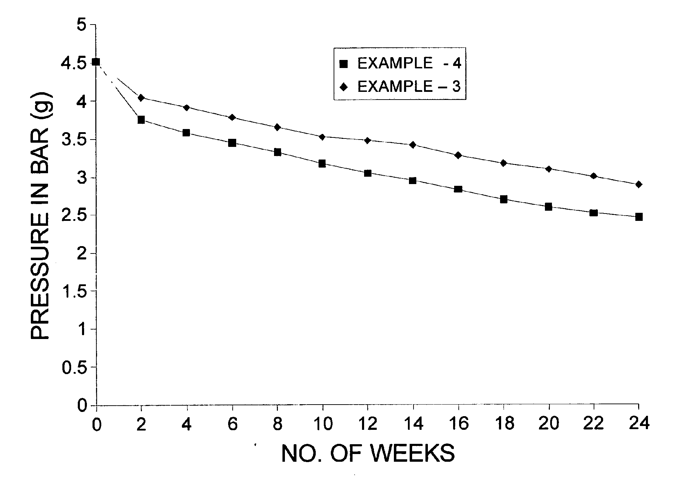

Fig.1. shows graphically Gas Volume (GV) vs Storage Time in weeks for Barrier Resins of Example 4 and Example 3 as measured in the bottle.

**TABLE - 6: CO₂ Permeability of Bottles of made from Barrier PET Resin Testing Conditions: 4 bar, 28°C, & 50% RH**

| **SAMPLE** | **Weeks for 17% CO₂ Loss** | **BIF** |
|---|---|---|
| **Standard PET** | 5.25 | 1.00 |
| **Example -1** | 6.14 | 1.17 |
| **Example - 2** | 7.35 | 1.40 |
| **Example - 3** | 10.45 | 2.00 |
| **Example - 4** | 8.40 | 1.60 |

**TABLE - 7: O₂ Ingress Data for Bottles made from Barrier PET Resin (as dissolved oxygen, ppm)**

| **SAMPLE** | **0^{th} Day** | **4^{th} Day** | **8^{th} Day** | **15^{th} Day** | **22^{nd} Day** |
|---|---|---|---|---|---|
| **Standard PET** | 0.051 | 0.300 | 1.520 | 2.010 | 3.110 |
| **Example - 3** | 0.051 | 0.150 | 1.340 | 1.470 | 2.630 |

### Advantages:

1. The polyesters of the present invention can be formed into variety of articles including small volume (200-350 mL) CSD bottles in the normal injection stretch blow molding (ISBM) machine by cold set or heat set blow molding and high barrier films by extrusion.
2. The improved resin composition of the present invention provides an enhanced improvement of barrier properties, for gases especially carbon dioxide, oxygen, nitrogen, water vapor and flavor retention.
3. Addition of nano particles during preform making shows improved barrier performance to gases when compared to the *insitu* addition while making the polymer.
4. The improved resin is suitable for monolayer high barrier PET bottle and film for packaging applications.

While considerable emphasis has been placed herein on the specific resin composition and processes for making it by the preferred embodiment, it will be appreciated that many alterations can be made and that many modifications can be made in the preferred embodiment without departing from the principles of the invention. These and other changes in the preferred embodiment as well as other embodiments of the invention will be apparent to those skilled in the art from the disclosure herein, whereby it is to be distinctly understood that the foregoing descriptive matter is to be interpreted merely as illustrative of the invention and not as a limitation.

## Claims

1. A preform resin composition comprising PET resin and a suspension of nano clay particles in an amount of 50 to 5000 ppm with respect to the resin, wherein the nano clay particles have a particle size ranging between 20 and 100 nm and are ultrasonically dispersed in a suspension medium.

2. The preform resin of claim 1, wherein the suspension medium is DMF.

3. The preform resin of claim 1 or 2, wherein the PET resin includes at least one additive selected from a group of additives comprising nucleating agents, micronized nucleating agents, colorants, and fast reheat additives.

4. The preform resin of claim 3, wherein the nucleating agent is selected from a group of agents comprising sodium acetate, sodium salicylate, and sodium sorbitol.

5. The preform resin of claim 3, wherein the micronized nucleating agent is selected from a group of agents comprising sodium benzoate, potassium benzoate and talc.

6. The preform resin of claim 3, wherein the fast reheat additive is selected from a group of additives comprising oxides of iron, oxides and carbides of transition metals.

7. The preform resin as claimed in any one of the preceding claims , wherein the PET resin has an intrinsic viscosity in the range of 0.70 - 0.90 dUg.

8. A method of making a preform resin comprising the following steps Introducing predetermined quantities of nano clay particles in DMF; ultrasonically dispersing said particles in the DMF to form a suspension; or choosing a suspension of nano clay particles in MEG and; dosing either of the suspensions to PET resin in an injection moulding apparatus at the time of making a preform such that the concentration of nano clay particles in the PET resin ranges from 50 to 5000 ppm.

9. A preform made with a resin composition as claimed in any one of claims 1 to 7.

10. A preform made by the method as claimed in claim 8.

11. A container made from the preform of claim 9.
